Europäisches Patentamt

European Patent Office

Office européen des brevets

(19)

(11) **EP 1 225 517 B1**

(12) **EUROPEAN PATENT SPECIFICATION**

(45) Date of publication and mention
of the grant of the patent:
**17.05.2006 Bulletin 2006/20**

(51) Int Cl.:
***G06F 17/30*** (2006.01)

(21) Application number: **01103933.6**

(22) Date of filing: **19.02.2001**

(54) **System and methods for computer based searching for relevant texts**

System und Methode zum rechnerbasierten Suchen nach relevanten Texten

Système et procédé pour la recherche de textes d'importance assistée par ordinateur

(84) Designated Contracting States:
**AT BE CH CY DE DK ES FI FR GB GR IE IT LI LU MC NL PT SE TR**

(30) Priority: **17.01.2001 EP 01810040**

(43) Date of publication of application:
**24.07.2002 Bulletin 2002/30**

(73) Proprietor: **International Business Machines Corporation**
**Armonk, NY 10504 (US)**

(72) Inventors:
• **Jäpel, Dieter**
**8805 Richterswil (CH)**
• **Klenk, Jürgen**
**8134 Adliswil (CH)**

(74) Representative: **Klett, Peter Michael**
**IBM Research GmbH**
**Zurich Research Laboratory**
**Säumerstrasse 4 / Postfach**
**8803 Rüschlikon (CH)**

(56) References cited:
**US-A- 5 933 822          US-A- 6 167 370**

• **GOLDMAN R ET AL: "Proximity search in databases" PROCEEDINGS OF THE TWENTY-FOURTH INTERNATIONAL CONFERENCE ON VERY-LARGE DATABASES, PROCEEDINGS OF 24TH ANNUAL INTERNATIONAL CONFERENCE ON VERY LARGE DATA BASES (VLDB'98), NEW YORK, NY, USA, 24-27 AUG. 1998, pages 26-37, XP002237315 1998, San Francisco, CA, USA, Morgan Kaufmann Publishers Inc, USA ISBN: 1-55860-566-5**

**Description**

The present invention relates to systems and methods for computer based text retrieval, and more particularly, to systems and method enabling the retrieval of those texts from databases that are deemed to be related to a search query.

BACKGROUND OF THE INVENTION

The number of electronic documents that are published today is ever increasing. For one to search for information has become difficult. Search engines typically deliver more results than a user can cope with, since it is impossible to read through all the documents found to be relevant by the search engine. It is of great help to present the search result in a condensed way, or to present only those documents that are likely to contain interesting information.

Schemes are known where a keyword collector is employed. These schemes take into account things like boldness of a word, and location in a document (i.e., words at the top are given more weight). One may use the statistical appearances of words, word-pairs and noun phrases in a document to calculate statistical weights (scores). To compute the content of a document, one may use a simple keyword frequency measure known as TFIDF (term frequency times inverse document frequency). This well-known technique is based on the observation that keywords that are relatively common in a document, but relatively rare in general are good indicators of the document's content. This heuristic is not very reliable, but is quick to compute.

There are approaches where a precision is determined in order to allow a better presentation of the results of a search. The precision is defined as the number of relevant documents retrieved by the search, divided by the total number of documents retrieved. Usually, another parameter, called recall, is determined, too.

There are more sophisticated techniques. Examples are those approaches where users rate pages explicitly. Systems are able to automatically mark those links that seem promising.

Other sophisticated techniques watch the user (e.g., by recording his preferences) in order to be able to make a distinction between information that is not of interest to the user and information that is more likely to be of interest.

Goldman et al. describe in their article "Proximity Search in Databases", in Proceedings of the 24th VLDB Conference, New York, USA, 1998, pages 26-37, XP002237315, ISBN: 1-55860-566-5, an information retrieval (IR) engine that can rank documents based on textual proximity of key-words within each document. This notion is applied to search across an entire database for objects that are "near" other relevant objects. Proximity search enables simple "focusing" queries based on general relationships among objects, helpful for interactive query sessions. The database is seen as a graph, with data in vertices (objects) and relationships indicated by edges. Proximity is defined based on shortest paths between objects. A prototype search engine was implemented that uses this model to enable keyword searches over databases, and it was found very effective for quickly finding relevant information. Computing the distance between objects in a graph stored on disk can be very expensive. Hence, it is shown how to build compact indexes that allow one to quickly find the distance between objects at search time. The proximity search architecture includes a definition of a query with a query word, a creation of a graph with nodes and links, a determination of a neighborhood of the query word, and a computation of object distances.

US Patent 6,167,370 relates to a computer based software system and method for semantically processing a user entered natural language request to identify and store linguistic subject-action-object (SAO) structures. Such structures are used as key words/phrases to search local and web-based databases for downloading candidate natural language documents, semantically processing candidate document texts into candidate document SAO structures, and selecting and storing only relevant documents whose SAO structures include a match with a stored request SAO structure. Further features include analyzing relationships among relevant document SAO structures and creating new SAO structures based on such relationships that may yield new knowledge concepts and ideas for display to the user and generating and displaying natural language summaries based on the relevant document SAO structures.

Despite all these schemes, it is still cumbersome to navigate through the internet, or even through one site of the internet if one tries to find a document or a set of documents containing information of interest.

SUMMARY OF THE INVENTION

It is an object of the present invention to provide a scheme that allows a user to more easily find relevant information in a collection of texts.

It is another object of the invention to provide a system that helps a user to locate those texts in a collection of texts, or subsections of texts that are related to a word, sentence, or text the user is looking for.

In accordance with the present invention, there is now provided a method as claimed in claim 1.

Viewing the present invention from another aspect, there is now provided a system as claimed in claim 16.

Viewing the present invention from yet another aspect, there is now provided a software module as claimed in claim 24.

The inventive scheme helps to realize systems where a user is able to find those documents actually containing information of interest and is thus less likely to follow "wrong" links and reach useless documents. The systems presented herein attempt to provide suggestions of relevant documents, only.

In accordance with one aspect of the present invention, an information retrieval system, method, and various software modules provide an improved information retrieval from a document database by providing a special ranking of documents taking into consideration the characterizing strength of each document.

In accordance with the present invention it is possible to realize search engines, search agents, and web services that are able to understand the users' intentions and needs.

The present invention can be used for information retrieval in general and for searching and recalling information, in particular.

It is an advantage of the present invention that those documents in a document database are offered for retrieval that accurately satisfy the user's query.

DESCRIPTION OF THE DRAWINGS

Preferred embodiments of the present invention will now be described, by way of example only, with reference to the following schematic drawings.

FIG. 1     shows a schematic block diagram of one embodiment, according to the present invention.

FIG. 2     shows a schematic flow chart in accordance with one embodiment of the present invention.

FIG. 3A     shows a first graph created in accordance with one embodiment of the present invention.

FIG. 3B     shows a second graph created in accordance with one embodiment of the present invention.

FIG. 3C     shows a third graph created in accordance with one embodiment of the present invention

FIG. 3D     shows a fourth graph created in accordance with one embodiment of the present invention.

FIG. 4A     shows the first graph, in accordance with one embodiment of the present invention, after the graph has been evolved.

FIG. 4B     shows the second graph, in accordance with one embodiment of the present invention, after the graph has been evolved.

FIG. 4C     shows the third graph, in accordance with one embodiment of the present invention, after the graph has been evolved.

FIG. 4D     shows the fourth graph, in accordance with one embodiment of the present invention, after the graph has been evolved.

FIG. 5A     shows the first graph, in accordance with one embodiment of the present invention, after the graph has been further evolved.

FIG. 5B     shows the second graph, in accordance with one embodiment of the present invention, after the graph has been further evolved.

FIG. 5C     shows the third graph, in accordance with one embodiment of the present invention, after the graph has been further evolved.

FIG. 5D     shows the fourth graph, in accordance with one embodiment of the present invention, after the graph has been further evolved.

FIG. 6     is a schematic table, in accordance with one embodiment of the present invention, that is used in order to illustrate how the characterizing strength is calculated.

FIG. 7     shows a schematic flow chart in accordance with another embodiment of,the present invention.

FIG. 8     shows a schematic block diagram of yet another embodiment, according to the present invention.

FIG. 9     shows a schematic block diagram of yet another embodiment, according to the present invention.

FIG. 10     shows another graph, in accordance with one embodiment of the present invention.

FIG. 11     shows the graph of Fig. 10 after the graph has been evolved.

FIG. 12     shows the graph of Fig. 11 after the word "agent" has been removed from the graph.

DESCRIPTION OF PREFERRED EMBODIMENTS:

The characterizing strength C of a document is an abstract measure of how well this document satisfies the user's information needs. Ideally, a system should retrieve only the relevant documents for a user. Unfortunately, this is a subjective notion and difficult to quantify. In the present context, the characterizing strength C is a reliable measure for a document's relevance, that can be automatically and reproducibly determined.

A text is a piece of information the user may want to retrieve. This could be a text file, a www-page, a newsgroup posting, a document, or a sentence from a book and the like. The texts can be stored within the user's computer system, or in a server system. The texts can also be stored in a distributed environment, e.g., somewhere in the Internet.

In order for a user to be able to find the desired information, it would be desirable for a collection of electronic texts (e.g., an appropriate database) to be available. An interface is required that allows the user to pose a question or define a search query. Standard interfaces can be used for this purpose.

A query is a word or a string of words that characterizes the information that the user seeks. Note that a query does not have to be a human readable query.

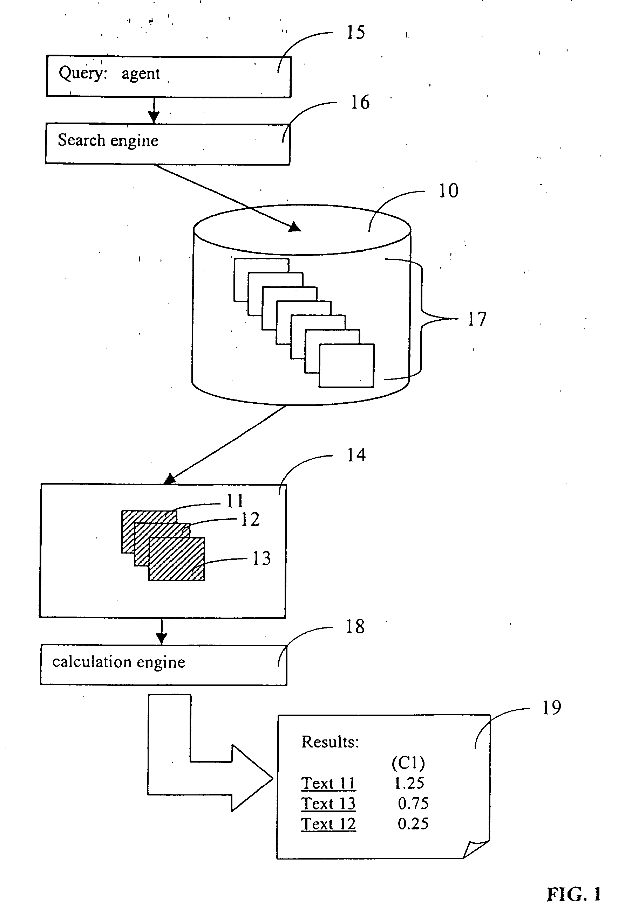

A first implementation of the present invention is now described in connection with an example. Details are illustrated in Figure 1. There is a database 10 comprising a collection of $m$ texts 17. In the present example, the user is looking for information concerning the word "agent". In order to do so, he creates a query 15 that simply contains the word "agent". He can create this query using a search interface (e.g., within a browser) provided on a computer screen.

In a preferred embodiment of the present invention, a search engine 16 is employed that is able to find all texts 17 in the database 10 that contain the word "agent". A conventional search engine can be used for that purpose. The search engine 16 can be located inside the user's computer or at a server. There are three texts 11, 12, and 13 ($k = 3$) that contain the word "agent", as illustrated in box 14. In an additional sequence of steps, the characterizing strength C of each text is determined in order to find the text or texts that are most relevant. For this purpose, a calculating engine 18 is employed. The calculating engine 18 may output the results in a format displayed in box 19. In this output box 19 a characterizing strength C1 is given for each of the three texts 11 - 13.

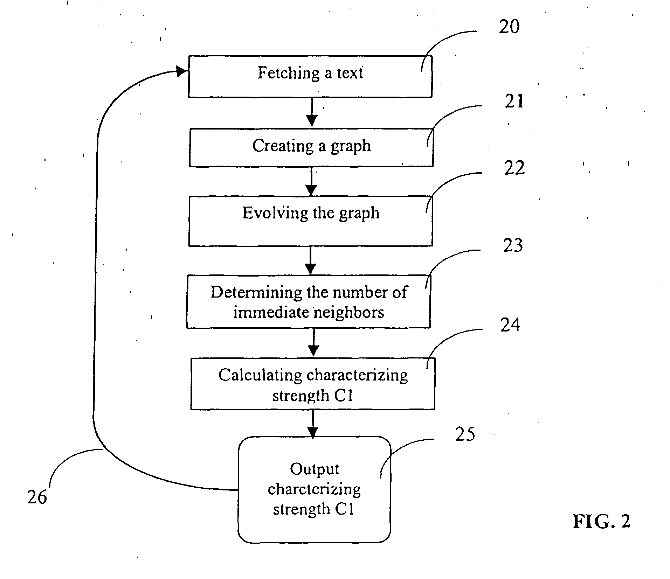

The sequence of steps that is carried out by the calculating engine 18 is illustrated as flow chart in Figure 2. The following sequence of steps is carried out for each text 11 - 13 that was identified as containing the word "agent".

In a first step 20, one text (e.g., text 11) is fetched. Then (step 21), a virtual network (herein referred to as graph) is created that indicates the relationship between the words of the text, e.g., the relationship between the word "agent" and the other words of the text. The words of the text are represented by network elements (nodes) and the relationship between words is represented by links (edges). If two words are connected through one link, then there is assumed to be a close relationship between these two words. If two words are more than one link apart, then there is no close relationship. A parser can be employed in order to generate such a network. An English slot grammar (ESG) parser is well suited. Alternatively, one can employ a self-organizing graph generated by a network generator, as described in connection with another embodiment of the present invention.

In a subsequent step 22, the graph is evolved. The graph can be evolved by reducing its complexity, for example. This can be done by removing certain words and links and/or by replacing certain words. During this step, the whole graph may also be re-arranged. This is done according to a pre-defined set of rules.

The characterizing strength (C) will now be calculated based on a topological structure of the neighborhood. The number of immediate neighbors of the word "agent" is determined (step 23). An immediate neighbor is a neighbor that is connected through one link to the word "agent". The number of immediate neighbors is determined by counting the number of neighbors (first neighbors) that are connected through one link to the word "agent". In that one counts the number of immediate neighbors, one is able the determine the topological structure of the graph. There are other ways to determine the topological structure of graphs, as will be described later.

The characterizing strength C1 of the respective text in now calculated (step 24) based on the number of immediate neighbors.

After having determined the characterizing strength C1, the result is output (step 25) such that it can be used for further processing. The characterizing strength C1 may for example be picked up by another application, or it may be processed such that it can be displayed on a display screen.

Some or all these steps 20 - 25 can now be repeated for all $k$ texts 11 - 13 that were identified as containing the word "agent". The repetition of these steps is schematically illustrated by means of the loop 26.

Text 11 is depicted in table 1.

| **Table 1:** Text 11 |
|---|
| I offer a definition of agents we can all probably agree on. |
| When asked what an agent is, I usually say that just as a word processor works through the medium of words, and spreadsheets work through numbers, agents work through the medium of actions. |
| For example, an agent might remind or automatically prompt me to email John, find me that article on IBM's new chip, or buy Yahoo stock when it drops to 80. |
| In a more technical vein, agents are atomic software entities operating through autonomous actions on behalf of the user, such as machines and humans, without constant human intervention. |

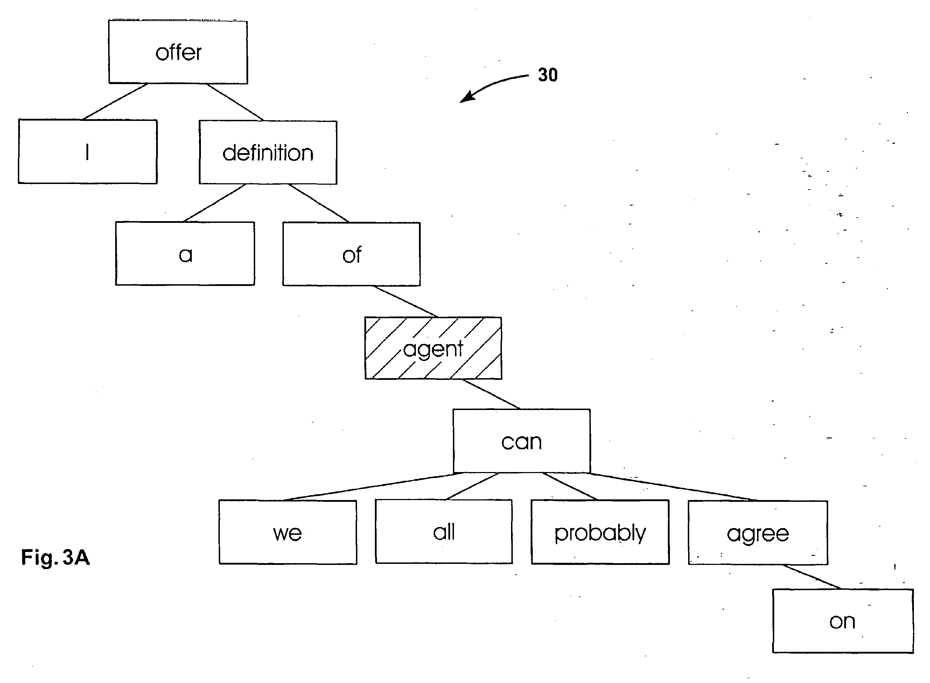

This text 11 comprises four sentences. Pursuant to step 21, a tree-like graph 30 is generated for each sentence using an English Slot Grammar parser. The first sentence graph 30, is illustrated in Figure 3A. The graph 30 comprises nodes (represented by boxes) and links (represented by lines connecting the boxes). In the present example, the parser creates a tree-like graph 30 with twelve nodes since the first sentence comprises twelve words. The word "agent" appears just once in this first sentence. The main verb "offer" forms the root of the tree-like graph 30.

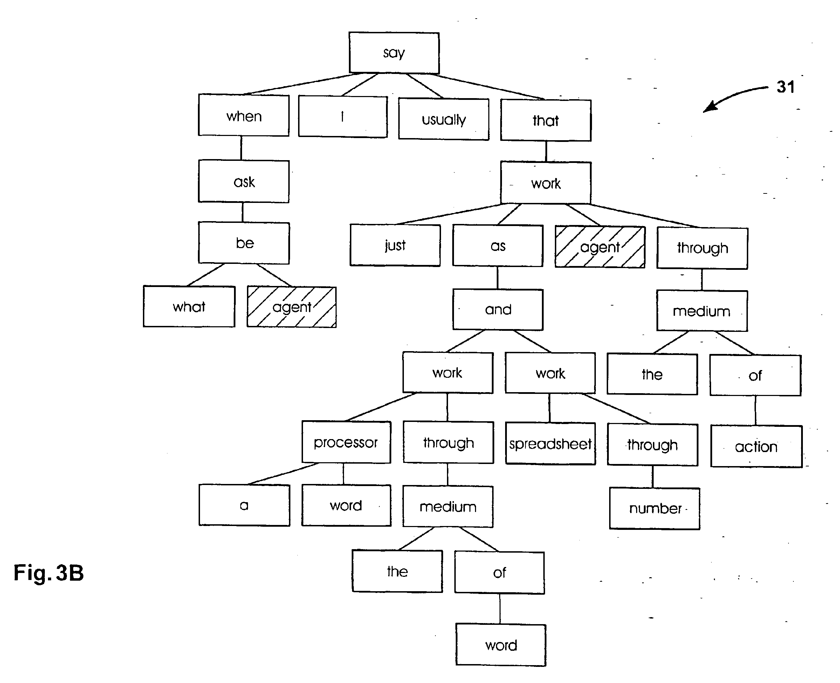

The second sentence graph 31 is illustrated in Figure 3B. The word "agent" is used two times in this sentence. The main verb "say" forms the root of the tree-like graph 31.

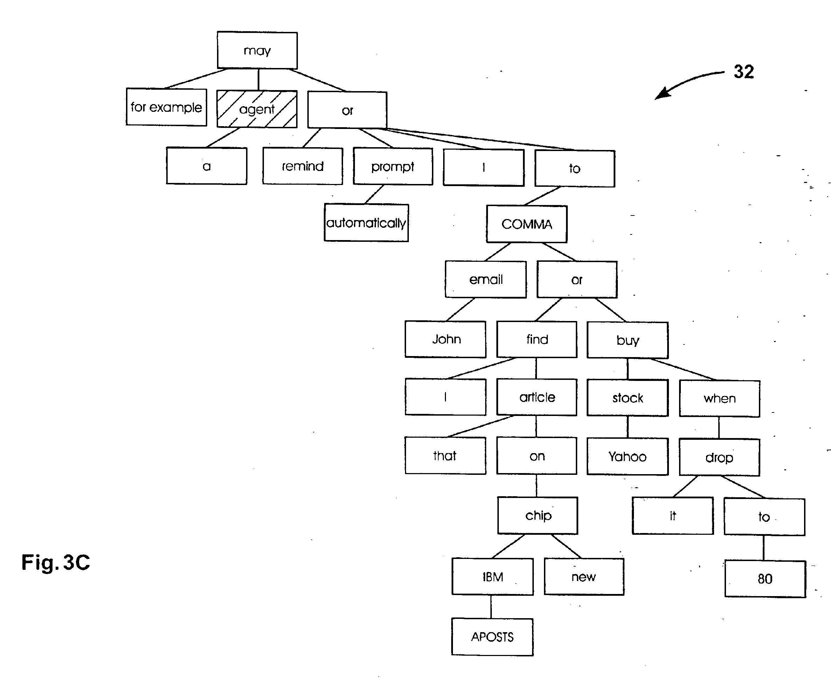

The third sentence graph 32 is shown in Figure 3C. The word "agent" is used just once. The main verb "may" forms the root of the tree-like graph 32.

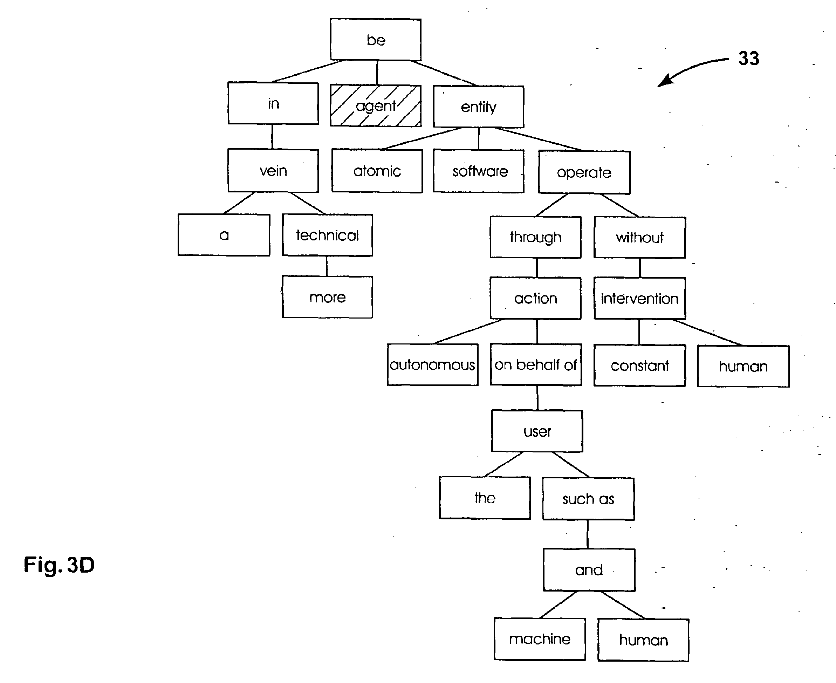

The fourth sentence graph 33 is depicted in Figure 3D. The word "agent" appears once. The main verb "be" forms the root of the tree-like graph 33.

In a subsequent step 22, the graph is evolved by reducing the complexity of the graphs 30 - 33. This is done - according to a pre-defined set of rules - by removing certain words and links and/or by replacing certain words. In the present example, at least the following three rules are used:

    1. Keep only nouns and verbs,
    2. Replace auxiliary verbs with main verbs, and
    3. Create verb group if verb consists of a sequence.

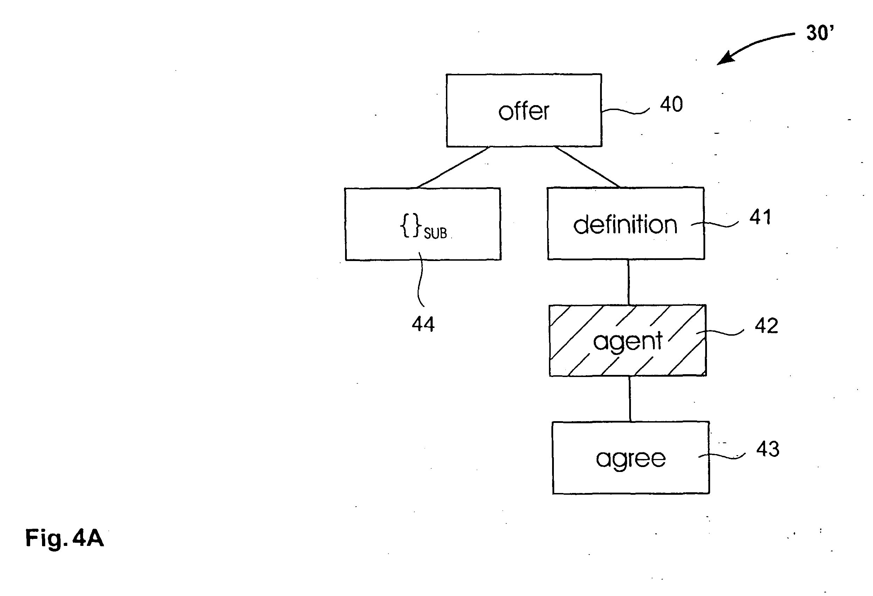

If one applies these three rules to the graph 30 of Figure 3A, a graph 30' is generated that comprises five nodes 40 - 44. This graph 30' is illustrated in Figure 4A. The following words have been removed from the network 30: "I", "a", "of", "can", "we", "all", "probably", "on". As a preparation for evolving the graph 30' further, one identifies the subject of the first sentence. Since there is no subject in the first sentence of text 11, an empty subject box 44 is generated.

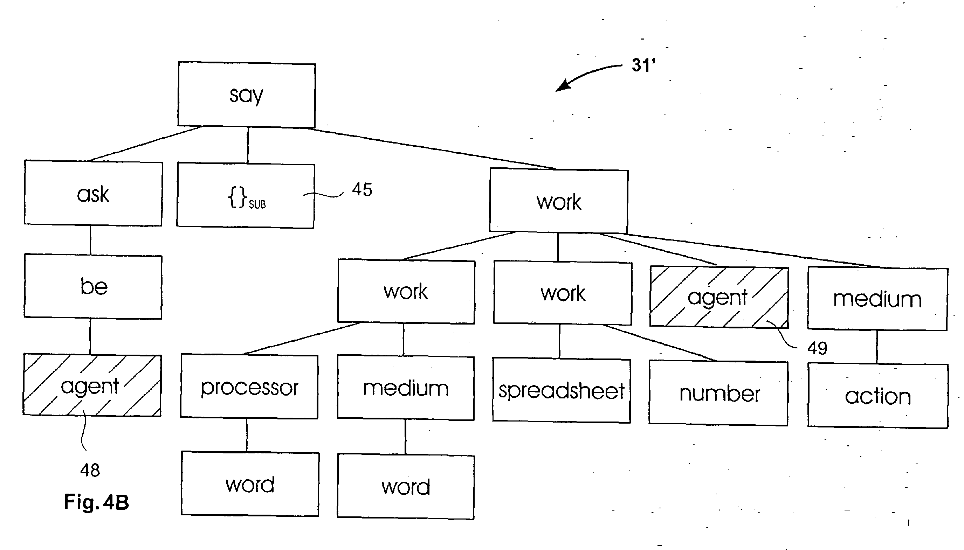

Applying the same set of rules 1. - 3. to the second sentence, a simplified graph 31' is obtained, as shown in Figure 4B. Since there is no subject in the second sentence either, an empty subject box 45 is generated.

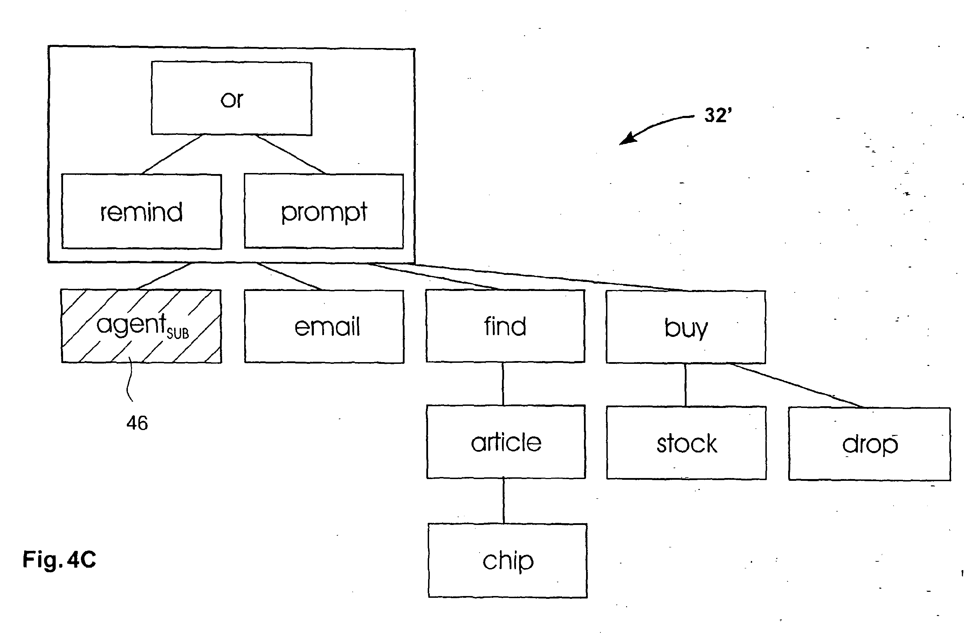

Using the same approach, a simplified graph 32' is obtained, as shown in Figure 4C. The word "agent" 46 is identified as subject in the third sentence. This subject is marked by assigning the identifier SUB to box 46.

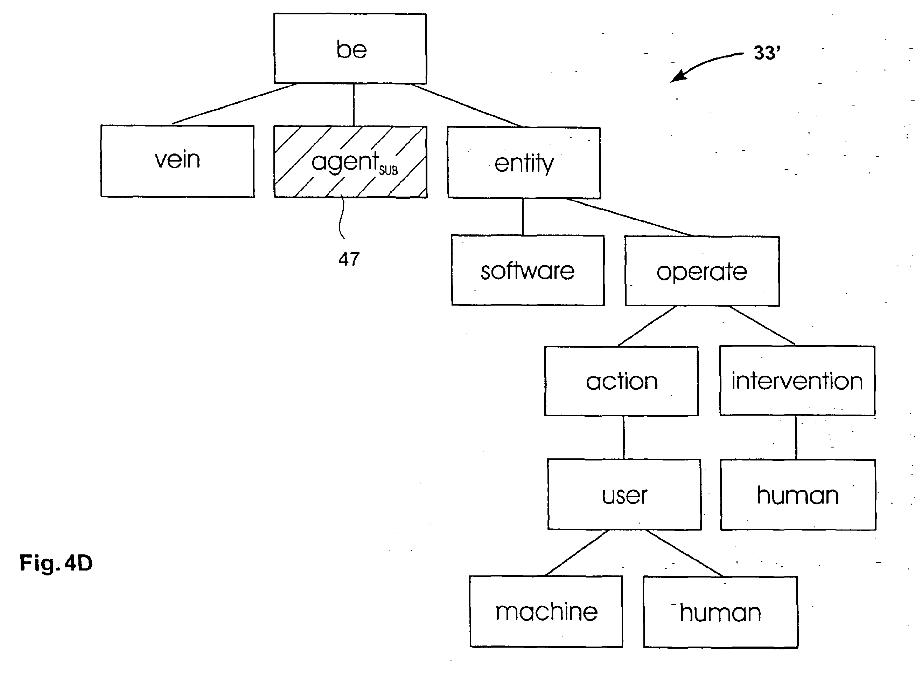

The simplified graph 33' is illustrated in Figure 4D. The word "agent" is the subject 47 of this sentence, too.

The complexity of the graphs 30' - 33' is further reduced according to an additional pre-defined set of rules. In the present example, the following additional rules are used:

    4. Leave out verbs, and
    5. Put subject at the root (instead of main verb).

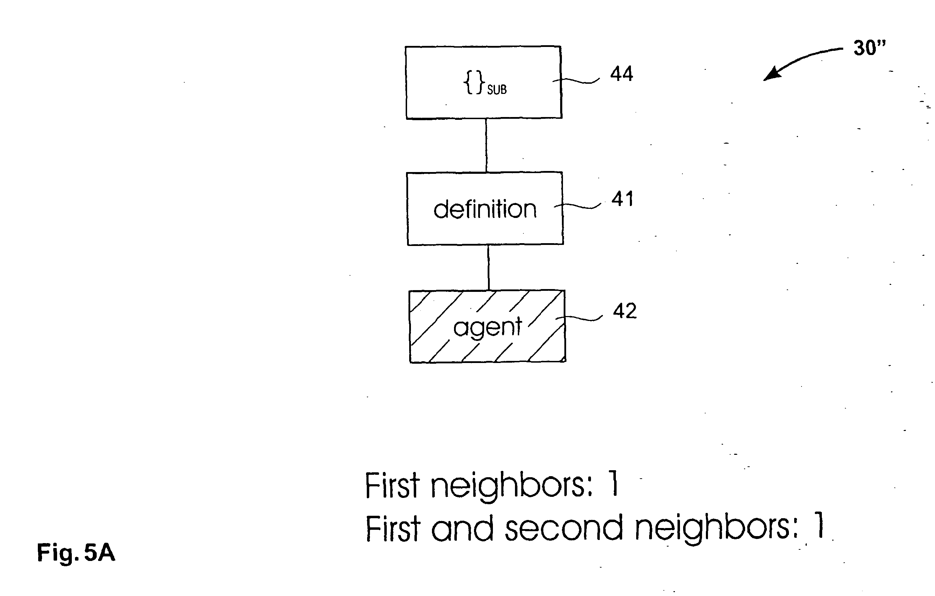

When applying these rules 4. and 5., the graphs 30", 31", 32", and 33" are obtained, as illustrated in Figures 5A - 5D, respectively.

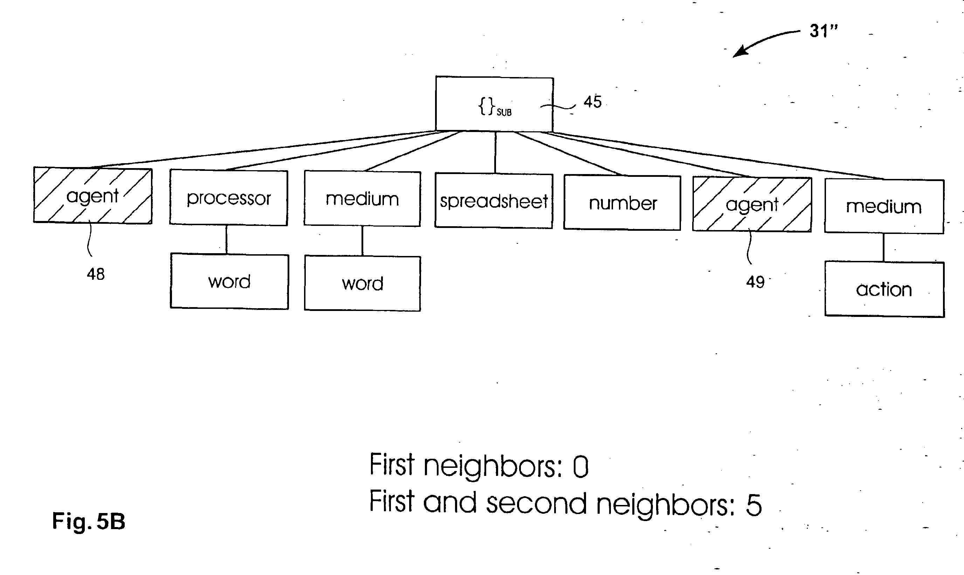

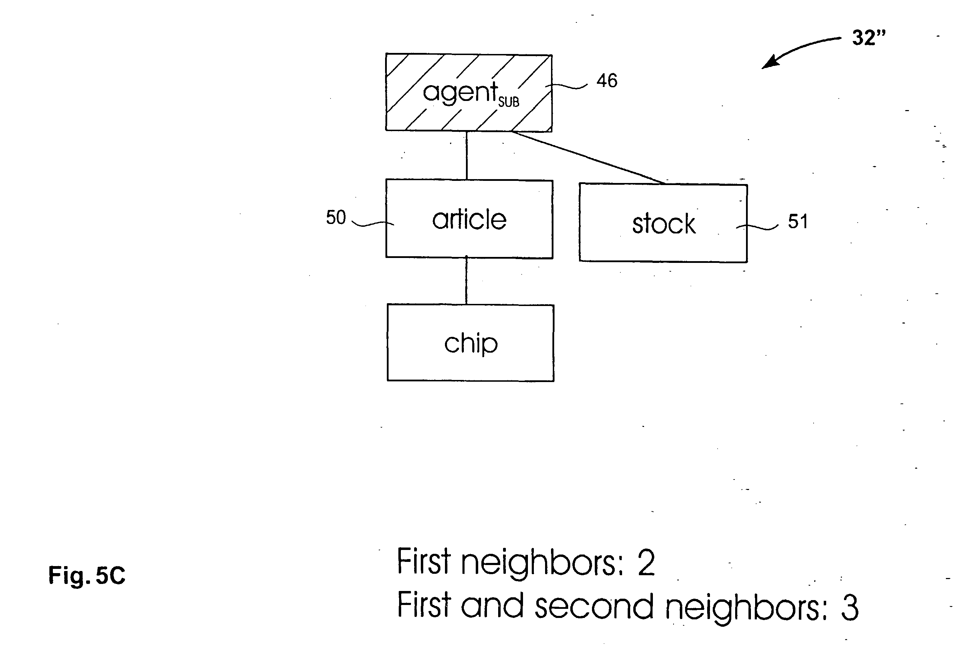

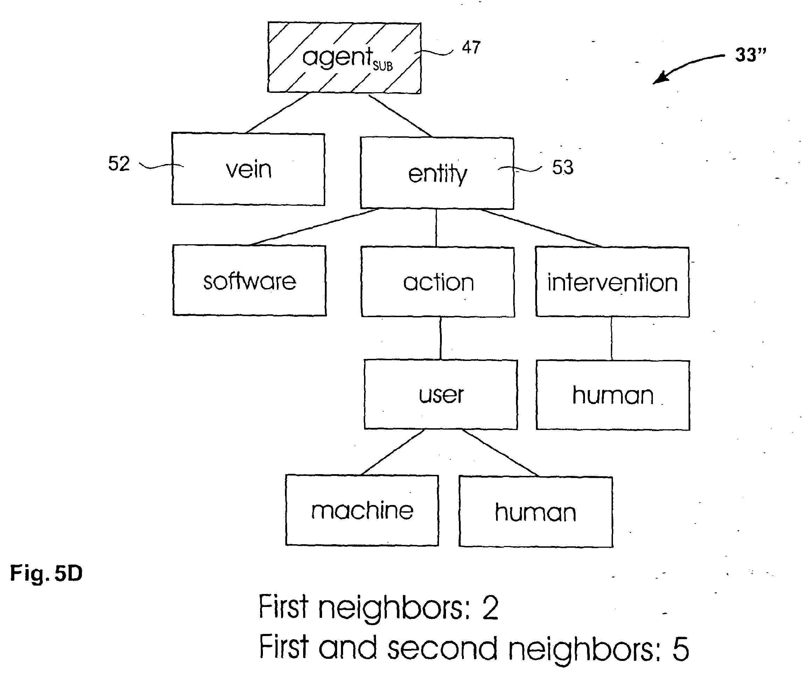

The number of immediate neighbors of the word "agent" is now determined for each graph 30", 31", 32", and 33" (step 23). The number of immediate neighbors is depicted in Figures 5A - 5D. The word "agent" 42 has only one immediate neighbor 41 in the graph 30" of the first sentence (cf. Figure 5A). The two words "agent" 48 and 49 have no immediate neighbors in the graph 31" of the second sentence (cf. Figure 5B). Note that the empty subject node 45 does not count as a neighbor. The word "agent" 46 has two immediate neighbors 50 and 51 in the graph 32" of the third sentence (cf. Figure 5C). The word "agent" 47 has two immediate neighbors 52 and 53 in the graph 33" of the fourth sentence (cf. Figure 5D).

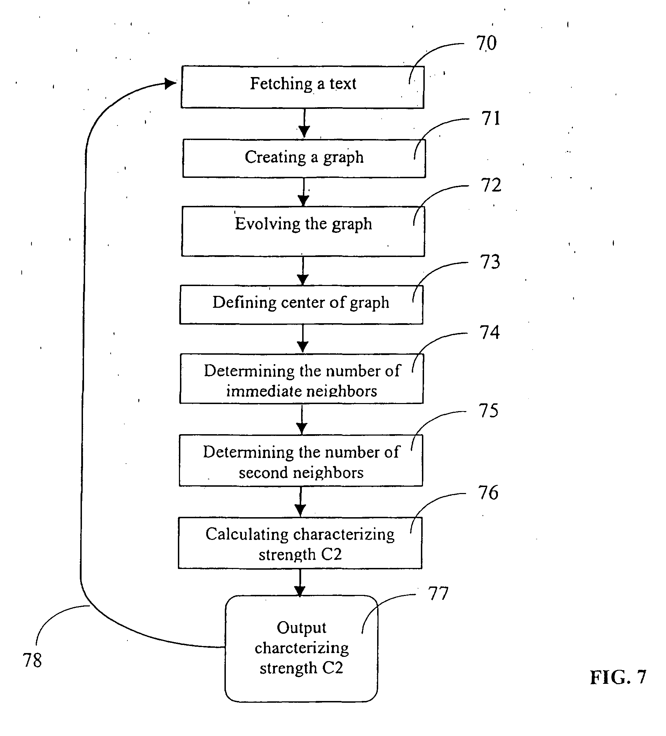

In an optional step one might also determine the second neighbors, as will be addressed in connection with another embodiment (see Figure 7). For sake of simplicity, the number of second neighbors is also displayed in the Figures 5A - 5D.

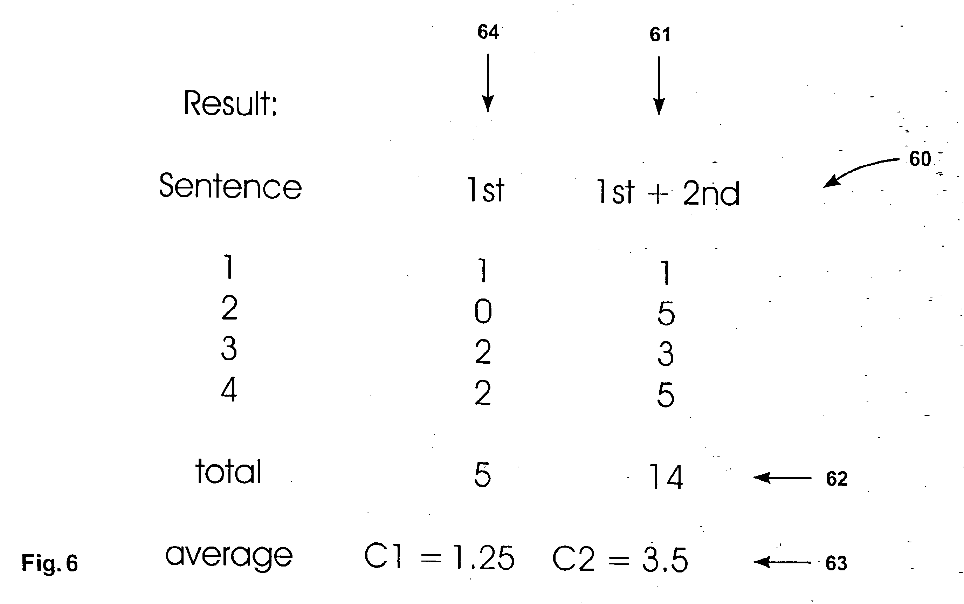

The calculation of the characterizing strength C is schematically illustrated in Figure 6. The first column 64 of the table 60 shows the number of immediate neighbors for each of the four sentences of the text 11. The sum of all numbers in a column is given in row 62. The characterizing strength C1, where only the immediate neighbors of the word "agent" are taken into consideration, is given in row 63. In the present example, the characterizing strength C1 is the average of all results in column 64. In more general terms, the characterizing strength is calculated as follows:

$$C1 = (c_{s1} + c_{s2} + c_{s3} + ... + c_{s(n-1)} + c_{sn}) / n$$

whereby n is the number of sentences in a given text and $C_{si}$ is the number of immediate neighbors of the $i^{th}$ sentence with i = 1, 2, ..., n. In the present example, the characterizing strength C1 of the text 11 is calculated as follows:

$$C1 = (1+0+2+2)/4 = 1.25.$$

Note that other algorithms can be used to determine the characterizing strength C1 of a text

An advantageous implementation of the present invention is represented by the flow chart in Figure 7. Like in the first example, the user is looking for texts that describe the word "agent" well. The following sequence of steps is carried out for each of the *k* texts 11 - 13 that were identified as containing the word "agent".

In a first step 70, one text (e.g., text 11) is fetched. Then (step 71), a graph is created. A parser (e.g., an ESG parser) can be employed in order to generate such a graph.

In a subsequent step 72, the graphs 30 - 33 are evolved. This is done according to a pre-defined set of rules. In the present example, the rules 1. - 5. are used, too. In order to further evolve the graphs 30 - 33, a step 73 is carried out. During this step, the centers of the graphs are defined by putting the subject in the center (instead of the main verb). In the tree-like graphs, the root is defined to be the center.

The number of immediate neighbors is determined (step 74) by counting the number of neighbors (first neighbors) that are connected through one link to the word "agent".

In an optional step 75, the second neighbors of the word "agent" are determined, as well. A second neighbor is a word that is connected through two links to the word "agent". Note that there is always an immediate neighbor between the word and any second neighbor.

The characterizing strength C2 of the respective text in now calculated (step 76) based on the number of immediate neighbors and second neighbors.

After having determined the characterizing strength C2, the result is output (step 77) such that it can be used for further processing. Some or all these steps 70 - 77 can now be repeated for all texts 11 - 13 that were identified as containing the word "agent". The repetition of these steps is schematically illustrated by means of the loop 78.

The calculation of the characterizing strength C2 is schematically illustrated in Figure 6. The second column 61 of the table 60 shows the number of immediate neighbors plus the number of second neighbors for each of the four sentences of the text 11. The sum of all numbers in a column is given in row 62. The characterizing strength C2, where the immediate neighbors and the second neighbors of the word "agent" are taken into consideration, is given in row 63. In the present example, the characterizing strength C2 is the average of all results in column 61. In more general terms, the characterizing strength is calculated as follows:

$$C2 = (\hat{c}_{s1} + \hat{c}_{s2} + \hat{c}_{s3} + ... + \hat{c}_{s(n-1)} + \hat{c}_{sn}) / n$$

whereby n is the number of sentences in a given text and $\hat{c}_{si}$ is the number of immediate neighbors plus the number of second neighbors of the $n^{th}$ sentence with i = 1, 2, ..., n. In the present example, the characterizing strength C2 of the text 11 is calculated as follows:

$$C2 = (1+5+3+5)/4 = 3.5.$$

Note that other algorithms can be used to determine the characterizing strength C2 of a text. The text 12 is displayed in table 2.

| Table 2: Text 12 |
| --- |
| This special section is based on a straightforward vision of the Internet evolution. |
| The Web, in order to avoid being overwhelmed by its own informational baggage, has to grow from a dumb publishing model toward a more refined and intelligent one. |
| This evolution will be based on all sorts of new and open technologies, like distributed objects, the Java programming language, semantic tagging, and the extensible markup language (XML). |
| However, a bit more murky is how agents will fit into the future of the Web. |

When following the above-described set of rules and steps according to the first embodiment (see Figure 2), one is able to determine the characterizing strength C1, as follows:

$$C1 = (0+0+0+1) / 4 = 1 / 4 = 0.25.$$

C2 can be determined to be:

$$C2 = (0+0+0+2) / 4 = 2 / 4 = 0.5.$$

The text 13 is displayed in table 3.

| Table 3: Text 13 |
|---|
| The Buyer's Agent of Central Ohio is the oldest and largest real estate company working only with buyers of real estate. We have saved our clients over $54 million nationwide. We do not list homes for sale. One hundred percent of my time and effort is devoted to helping my clients find homes. With a thorough knowledge of the Columbus real estate market, I can show homes listed by any brokerage, by private owners or by builders and I never represent the seller! |

When following the above-described set of rules and steps according to the first embodiment (see Figure 2), one is able to determine the characterizing strength C1, as follows:

$$C1 = (2+0+0+0) / 4 = 1 / 2 = 0.5.$$

C2 can be determined to be:

$$C2 = (5+0+0+0) / 4 = 5 / 4 = 1.25.$$

When comparing the results for all three texts 11, 12, and 13, one now can draw the conclusion that the text 11 is most relevant since it has a C1 of 1.25.

| Text | C1 | C2 |
|---|---|---|
| 11 | 1.25 | 3.5 |
| 12 | 0.25 | 0.5 |
| 13 | 0.5 | 1.25 |

If one uses C2 instead of C1, the result is even more pronounced. The text 11 is clearly the one that characterizes the word "agent" the best. The next best fit is the text 13. The calculation engine 18 (cf. Figure 1) thus is able to provide an output box 19 where all three texts 11, 12, and 13 are ordered according to their characterizing strength C1. The same ranking can be done using the C2 results. The user can now retrieve the respective texts by clicking on one of the http-links in the output box 19. These links are indicated by means of underlining.

In another embodiment of the present invention, a semantic network generator (also called semantic processor) is employed. This semantic network generator creates a graph for each text that is returned by a search engine when processing a search query. Details about a semantic network generator are given in the co-pending patent application EP 962873-A1, currently assigned to the assignee of the present patent application. This co-pending patent application was published on 8 December 1999. The semantic network generator creates a graph that has a fractal hierarcial structure and comprises semantical units and pointers. In accordance with the above-mentioned published EP patent application, the pointers may carry weights, whereby the weights represent the semantical distance between neighboring semantical units.

According to the present invention, such a graph generated by the semantic network generator can be evolved by applying a set of rules. One can, for example, remove all pointers and semantical units that have a semantical distances with respect to the word(s) given by a query that is above or below a certain threshold. In other words, only the neighborhood of the word(s) the user has listed in the query is kept in the graph. All other semantical units and pointers are not considered in determining the characterizing strength of the respective text. Some or all of the rules described in connection with the first two embodiments can be employed as well. One can also employ self-organizing graphs to reduce the complexity before determining the characterizing strength (C1 and/or C2). Such self-organizing graphs are described in the co-pending patent application PCT/IB99/00231, as filed on 11 February 1999 and in the co-pending German patent application with application number DE, 19908204.9, as filed on 25 February 1999.

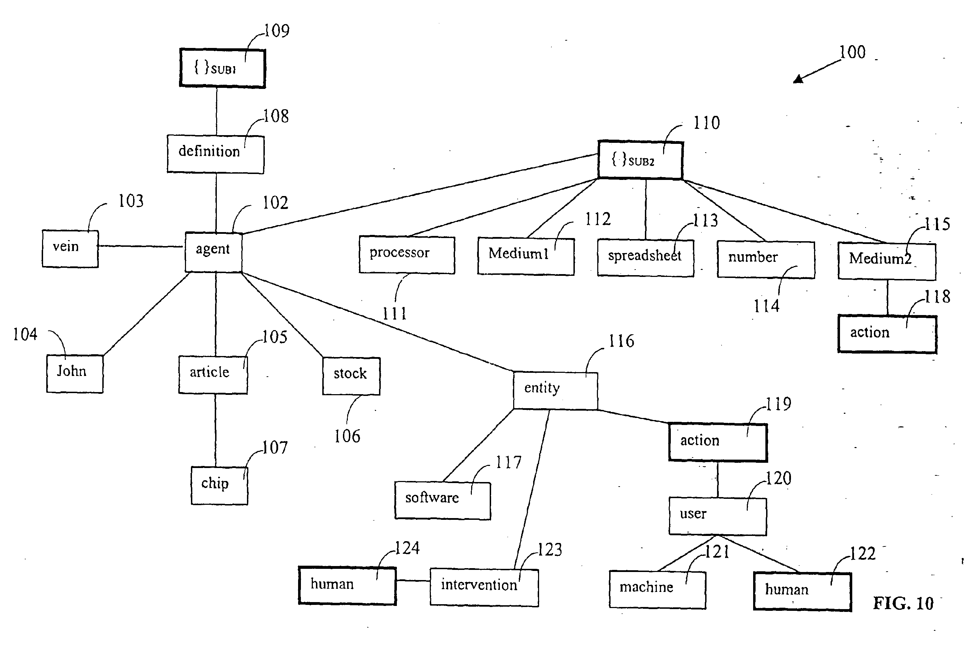

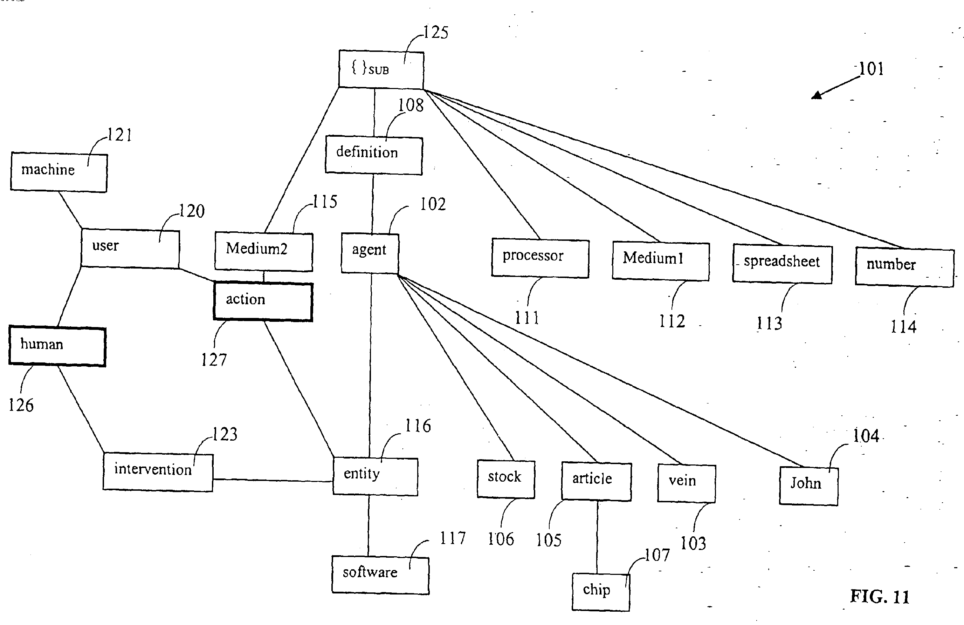

Yet another embodiment is described in connection with Figures 10 and 11. A semantic network generator similar to those disclosed in the above-mentioned patent application EP 962873-A1, can be employed to generate graphs. Referring to the text 11 again, such a network generator would be designed to either generate four separate graphs (first approach), one for each sentence in the text 11, or to generate one common graph for the whole text 11 (second approach). If separate graphs are generated, then these graphs are to be combined in a subsequent step into one common graph. This can be done by identifying identical words in each of the sentences, such that the graphs can be linked together (mapped) via these identical words.

The result of the second approach is illustrated in Figure 10. The common graph 100 comprises semantical units 102 - 124. This graph 100 can then be automatically evolved by employing certain rules. One can for example start this process by putting semantical units of the graph 100 into a relationship. In the present example, the two subjects $\{\}_{SUB1}$ 109 and $\{\}_{SUB2}$ 110 are assumed to be the same, since all the sentences of the text 11 are written by the same person (the author or speaker). The two boxes 109 and 110 can thus be combined into a common box $\{\}_{SUB}$ 125, as illustrated in Figure 11. The structure of the graph 100 can be further evolved using linguistic and/or grammar rules. In evolving the graph 100, the system may take into consideration that definitions by analogy, as in the second sentence of text 11, are quite commonly used to describe things. This fact is represented in the graph 101, that is illustrated in Figure 11. The two analogies "processor" 111 and "spreadsheet" 113 are on the same hierarchical level in the graph 101 as the word "agent" 102. It is now further assumed by the system that the word "human" - which appears twice (boxes 122 and 124) - refers to the same human beings. These two instances 122 and 124 of the word "human" can thus be combined, as shown on the left hand side of Figure 11. The result is depicted as box 126. The word "action" (boxes 118 and 119) can also be combined for the same reason. The result is depicted as box 127.

According to the present invention, graphs can be evolved by removing nodes and/or links, by adding nodes and/or links, by replacing nodes and/or links, and by fusion of nodes and/or links. This is done - according to a pre-defined set of rules. Note that these are just some example of how graphs can be combined and evolved according to pre-defined rules. The rules are defined such that the graphs can be matched together making use of their closeness. Additional details about operations for evolving a graph are addressed in our co-pending patent application reference CH9-2000-0036, entitled "Meaning Understanding by Means of Local Pervasive Intelligence".

One may either evolve the graphs of each sentence (sentence graphs) of a text before combining them into one common graph, or one may combine the graphs of each sentence (sentence graphs) into one common graph prior to evolving this common graph. According to the present invention, graphs are combined by fusion of identical instances (nodes). In other words, two identical nodes are combined into one single node.

In an improved implementation of the present invention, a query expansion is preformed. Such a query expansion builds an improved query from the query keyed in by the user. It could be created by adding terms from other documents, or by adding synonyms of terms in the query (as found in a thesaurus).

In yet another embodiment, a parser is employed that generates a mesh-like graph rather than a tree-like graph. The semantic graph generator is an example of such a parser generating mesh-like graphs.

The present characterzation scheme can also be used in connection with other schemes for classifying texts according to their relevance. One can, for example, combine the characterizing strength C of a document with other abstract measures such as the TFID. This may give a user additional useful clues.

There are different ways to implement the present invention. One can either realize the invention in the client system, or in the server system, or in a distributed fashion across the client and the server. The invention can be implemented by or on a general or special purpose computer.

A computer program in the present context means an expression, in any language, code or notation, of a set of instructions intended to cause a device having an information processing capability to perform a particular function.

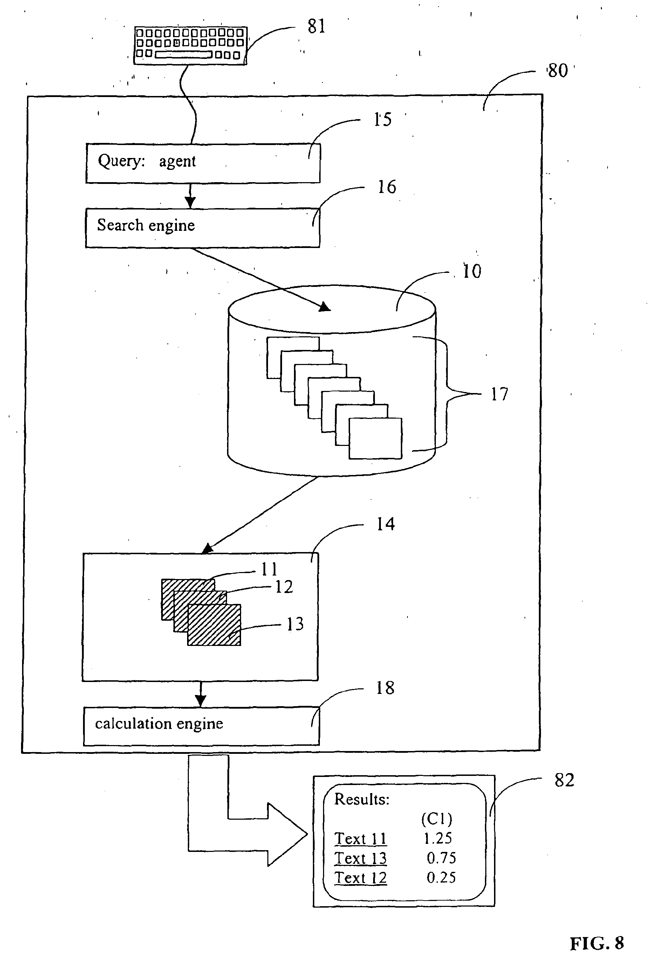

A first example is given in Figure 8. In this example, the client system 80 comprises all elements 10 - 18 that were described in connection with Figure 1. There is a keyboard 81 that can be used by the user to key in a query. The result is processed by the client system 80 such that it can be displayed on a display screen 82.

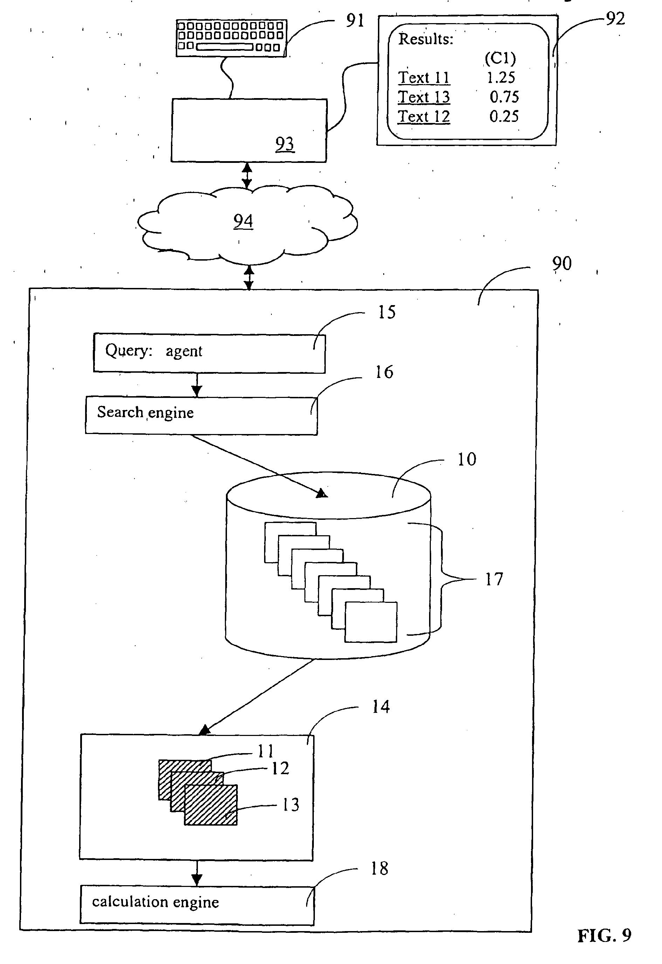

A client-server implementation of the present invention is illustrated in Figure 9. As shown in this Figure, there is a client computer comprising a computing system 93, a keyboard 91, and a display 92. This client computer connects via a network 94 (e.g., the Internet) to a server 90. This server 90 comprises the elements 10 - 18. The query is processed by the server and the characterizing strength is computed by the server. In this embodiment, the result is output in a fashion that it can be sent via the network 94 to the client computer. Likewise, the result can be fetched by the client computer from the server 90. The result is processed by the client computer such that it can be displayed on the display 92. If the users selects one of the texts on the display 92, the corresponding full-text is retrieved from the database 10 located at the server side. The database 10 may even reside on a third computer, or the documents 17 may even be distributed over a multitude of computers. The search engine may also be on another computer, just to mention some variations that are still within the scope of the present invention.

Note that there are many different ways to calculate the characterizing strength of texts. The basic idea is to calculate, after evolution of the graph(s), topological invariances. In other words, the characterizing strength (C) is calculated based on the topological structure of the neighborhood. There are different ways to determine the topological invariances of a graph. One may determine distances, or graph dimensions, or connection components, for example. It is also conceivable to define a metric on the graph to define distances between nodes. The nodes of a graph may also have an associated topology table which defines the structure of the neighborhood. Both of these can also be used to determine topological invariances, such as nearest neighbor counting, etc.

As described in connection with the above embodiments, one may count the first neighbors (cf. first embodiment), or the first and second neighbors (cf. Figure 7) in order to determine the characterizing strength (C).

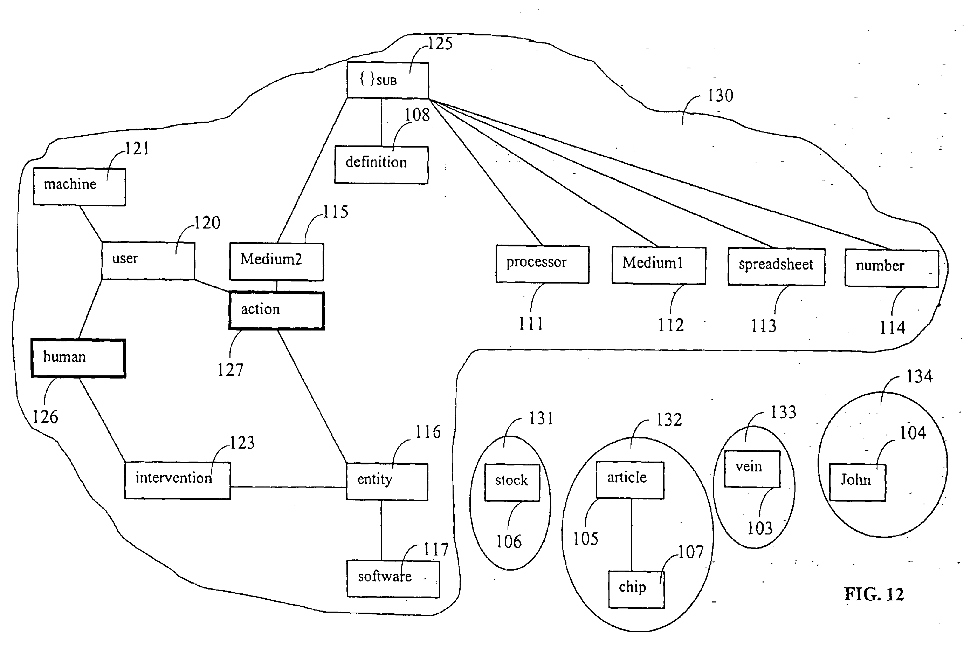

Instead of counting neighbors, or in addition to the counting neighbors, one may remove the word "agent" 102 and the links around this word from the graph 101 such that this graph 101 falls apart, as illustrated in Figure 12. By removing the word "agent" 102 and the links around this word, one obtains five separate subgraphs 130, 131, 132, 133, and 134. The characterizing strength (C) may be determined by counting the number of nodes of the largest subgraphs. In the present example, the largest subgraph is the graph 130. It has 14 nodes. In the present example, the characterizing strength (C) would be 14.

Instead of taking the mere number of nodes of the largest subgraph, one can determine the average of the number of nodes of all subgraphs 130, 131, 132, 133, and 134 divided by the number of subgraphs. This would lead to the following result: $C = (14+1+2+1+1)/5 = 3.8$.

Yet another approach is to determine the number of links that link the word "agent" 102 with other nodes. Again using the example given in Figure 11, the would result in $C = 6$.

One may also determine the characterizing strength (C) by analyzing the number of links per node. The more links there are in a graph, the more likely it is that the graph fully describes the word "agent" 102.

Depending on the actual definition of the characterizing strength (C), the value of C may vary in a certain range between 0 and infinity. C may be standardized such that it varies between a lower boundary (e.g., 0) and an upper boundary (e.g., 100), for example.

It is appreciated that various features of the invention which are, for clarity, described in the context of separate embodiments may also be provided in combination in a single embodiment. Conversely, various features of the invention which are, for brevity, described in the context of a single embodiment may also be provided separately or in any suitable subcombination.

**Claims**

1. Method for automatically determining a characterizing strength which indicates how well a tex identified as containing a query word (11) stored in a database (10) describes a query (15), comprising the steps of:

   a) defining the query (15) comprising the query word which identifies the text as containing the query word.
   b) creating (71) a graph (30) with nodes and links, whereby words of the text (11) are represented by the nodes and a relationship between the words is represented by the links, the query word being represented by one of the nodes of the graph (30);
   c) evolving (72) the graph (30) according to a pre-defined set of rules,
   d) determining a neighborhood of the query word, the neighborhood comprising those nodes connected through one or more links to the query word; and,
   e) calculating the characterizing strength based on the neighborhood, wherein the characterizing strength of the text is calculated in dependence on the characterizing strengths of all sentences of the respective text.

2. The method of claim 1, wherein the characterizing strength is calculated in step e) by counting the number of immediate neighbors of the query word, whereby an immediate neighbor is a word that is connected through one link to the query word.

3. The method of claim 1, wherein the database (10) stores a plurality of texts (17).

4. The method of claim 1, comprising performing a search to find texts (11, 12, 13) in the database (10) that contain the query word.

5. The method of claim 4, wherein the steps b) through e) are repeated for each text (11, 12, 13) that contains the query word.

6. The method of claim 5, comprising displaying a list (82) showing the characterizing strength of each text (11, 12, 13) that contains the word.

7. The method according to any one of the preceding claims, wherein a parser is employed, to create the graph in step b).

8. The method of any one of claims 1 to 6, wherein a semantic network generator is employed to create the graph (30) in step b).

9. The method of any one of claims 1 to 3, wherein one graph is generated for each sentence in the text and wherein the characterizing strength is calculated for each sentence by performing the steps b) through e).

10. The method of any one of claims 1 to 3 , wherein the graph is evolved in step c) by removing all words from the text that are not nouns and/or verbs.

11. The method of any one of claims 1 to 3, wherein the graph is evolved in step c) by replacing auxiliary verbs with main verbs.

12. The method of any one of claims 1 to 3, wherein the graph is evolved in step c) by leaving out verbs.

13. The method of any one of claims 1 to 3, wherein the subject of the sentence is identified and placed centrally in the graph to produce a tree-like graph structure in which the subject is at the root, prior to carrying out step d).

14. The method of claim 2, comprising the step of determining the number of second neighbors of the query word, whereby a second neighbor is a word that is connected through two links to the query word.

15. The method of claim 2 or 14, wherein the characterizing strength of the text is an average calculated by

   • adding the characterizing strengths of all sentences of the respective text, and
   • then dividing the result of the previous step by the number of sentences.

16. A system for automatically determining a characterizing strength which indicates how well a text (17) in a database (10) describes a search query (15), the system comprising:

   o a database (10) storing a plurality of $m$ texts (17);
   o a search engine (16) for processing a search query (15) in order to identify thoses $k$ texts (11, 12, 13) from the plurality of $m$ texts (17) that match the search query (15); and,
   o a calculation engine (18) with means for calculating the characterizing strengths of each of the $k$ texts (11, 12, 13) that match the search query (15) comprising:

   • means for creating a graph with nodes and links, whereby words of the text are represented by the nodes and the relationship between words is represented by the links, the search query (15) comprising a query word that being one of the words within one of the $k$ texts (11) and being represented by one of the nodes of the graph,
   • means for evolving the graph according to a pre-defined set of rules,
   • means for determining a neighborhood of the word, whereby the neighborhood comprises those nodes that are connected through one or more links to the word, and
   • means for calculating the characterizing strength based on the topological structure of the neighborhood, wherein the characterizing strength of the text is calculated in dependence on the characterizing strengths of all sentences of the respective text.

17. The system of claim 16, wherein the database (11) is stored in a server (90) connected via a network (94) to a client system (91, 92, 93).

**18.** The system of claim 16 comprising a parser for creating the graph.

**19.** The system of claim 16 comprising a semantic network generator for creating the graph.

**20.** The system of claim 16, wherein the calculation engine calculates the characterizing strength by counting the number of immediate neighbors of the word, whereby one of the immediate neighbors is a word that is connected through one link to the word.

**21.** An information retrieval system comprising a system as claimed in any of claims 16 to 20.

**22.** A server computer system comprising the system as claimed in any of claims 16 to 20.

**23.** A client computer system comprising the system as claimed in any of claims 16 to 20.

**24.** Software module for automatically determining a characterizing strength which indicates how well a text in a database describes a query, whereby said software module, when executed by a programmable data processing system, performs the steps:

a) enabling a user to define a query (15) comprising a word,
b) fetching each one of a plurality of texts;
c) creating a graph (71) with nodes and links, whereby words of the text (17) are represented by nodes and the relationship between words is represented by means of the links, the query word being one of the words within the text (17) and being represented by one of the nodes of the graph, the said text being the fetched text;
d) evolving the graph (72) according to a pre-defined set of rules,
e) determining a neighborhood of the word, whereby the neighborhood comprises those nodes that are connected through one or a few links to the word, and
f) calculating the characterizing strength based on the topological structure of the neighborhood, the characterizing strength of the text being calculated in dependence on the characterizing strengths of all sentences of the respective text;
g) displaying the characterizing strenth

**25.** The software module of claim 24 comprising a search engine (16) for identifying those texts (11, 12, 13) in a plurality of texts (17) that match the query.

**Patentansprüche**

**1.** Verfahren zur automatischen Ermittlung einer charakteristischen Stärke, welche anzeigt, wie gut ein in einer Datenbank (10) gespeicherter und als ein Abfragewort enthaltend erkannter Text (11) eine Abfrage (15) beschreibt, wobei das Verfahren die folgenden Schritte umfasst:

a) Definieren der Abfrage (15), welche das Abfragewort umfasst, das den Text als das Abfragewort enthaltend kennzeichnet,
b) Erzeugen (71) eines Graphen (30) mit Knoten und Verbindungslinien, wobei Wörter des Textes (11) durch die Knoten dargestellt werden und eine Beziehung zwischen den Wörtern durch die Verbindungslinien dargestellt wird, wobei das Abfragewort durch einen der Knoten des Graphen (30) dargestellt wird;
c) Entwickeln (72) des Graphen (30) nach einer Reihe vordefinierter Regeln;
d) Ermitteln einer näheren Umgebung des Abfragewortes, wobei die nähere Umgebung diejenigen Knoten umfasst, welche über eine oder mehrere Verbindungslinien mit dem Abfragewort verbunden sind; und
e) Berechnen der charakteristischen Stärke unter Einbeziehung der näheren Umgebung, wobei die charakteristische Stärke des Textes in Abhängigkeit von den charakteristischen Stärken aller Sätze des betreffenden Textes berechnet wird.

**2.** Verfahren nach Anspruch 1, bei welchem die charakteristische Stärke in Schritt e) durch Ermitteln der Anzahl der direkten Nachbarn des Abfragewortes berechnet wird, wobei ein direkter Nachbar ein Wort ist, welches über eine Verbindungslinie mit dem Abfragewort verbunden ist.

**3.** Verfahren nach Anspruch 1, bei welchem in der Datenbank (10) eine Vielzahl von Texten (17) gespeichert ist.

**4.** Verfahren nach Anspruch 1, welches das Ausführen einer Suche nach Texten (11, 12, 13) in der Datenbank (10) umfasst, die das Abfragewort enthalten.

**5.** Verfahren nach Anspruch 4, bei welchem die Schritte b) bis e) für jeden Text (11, 12, 13) wiederholt werden, der das Abfragewort enthält.

**6.** Verfahren nach Anspruch 5, welches das Anzeigen einer Liste (82) umfasst, die die charakteristische Stärke jedes Textes (11, 12, 13) zeigt, der das Wort enthält.

**7.** Verfahren nach einem der vorangehenden Ansprüche, bei welchem zum Erzeugen des Graphen in Schritt b) ein Parser verwendet wird.

**8.** Verfahren nach einem der Ansprüche 1 bis 6, bei welchem zum Erzeugen des Graphen (30) in Schritt b) ein Semantiknetzgenerator verwendet wird.

**9.** Verfahren nach einem der Ansprüche 1 bis 3, bei welchem für jeden Satz in dem Text ein Graph erzeugt wird und für jeden Satz durch Ausführen der Schritte b) bis e) die charakteristische Stärke berechnet wird.

**10.** Verfahren nach einem der Ansprüche 1 bis 3, bei welchem der Graph in Schritt c) **dadurch** entwickelt wird, dass aus dem Text alle Wörter außer Substantiven und/oder Verben entfernt werden.

**11.** Verfahren nach einem der Ansprüche 1 bis 3, bei welchem der Graph in Schritt c) durch Ersetzen der Hilfsverben durch Vollverben entwickelt wird.

**12.** Verfahren nach einem der Ansprüche 1 bis 3, bei welchem der Graph in Schritt c) durch Weglassen der Verben entwickelt wird.

**13.** Verfahren nach einem der Ansprüche 1 bis 3, bei welchem vor dem Ausführen von Schritt d) das Subjekt des Satzes ermittelt und in die Mitte des Graphen gesetzt wird, um eine baumartige Graphenstruktur zu erzeugen, in welcher das Subjekt die Wurzel bildet.

**14.** Verfahren nach Anspruch 2, welches des Schritt des Ermittelns der Anzahl zweiter Nachbarn des Abfragewortes umfasst, wobei ein zweiter Nachbar ein Wort ist, das über zwei Verbindungslinien mit dem Abfragewort verbunden ist.

**15.** Verfahren nach Anspruch 2 oder 14, bei welchem die charakteristische Stärke des Textes ein Mittelwert ist, der berechnet wird durch

   • Addieren der charakteristischen Stärken aller Sätze des betreffenden Textes und anschließend
   • Dividieren des im vorangehenden Schritt erhaltenen Ergebnisses durch Anzahl der Sätze.

**16.** System zur automatischen Ermittlung einer charakteristischen Stärke, welche anzeigt, wie gut ein in einer Datenbank (10) gespeicherter Text (11) eine Suchabfrage (15) beschreibt, wobei das System Folgendes umfasst:

   o eine Datenbank (10), in der eine Vielzahl von $m$ Texten (17) gespeichert ist;
   o eine Suchmaschine (16) zum Verarbeiten einer Suchabfrage (15), um aus der Vielzahl von $m$ Texten (17) diejenigen $k$ Texte (11, 12, 13) herauszusuchen, die mit der Suchabfrage (15) übereinstimmen; und
   o eine Recheneinheit (18) mit Mitteln zum Berechnen der charakteristischen Stärken jedes der $k$ Texte (11, 12, 13), die mit der Suchabfrage übereinstimmen, wobei die Mittel Folgendes umfassen:

      • ein Mittel zum Erzeugen eines Graphen mit Knoten und Verbindungslinien, wobei Wörter des Textes durch die Knoten dargestellt werden und die Beziehung zwischen Wörtern durch die Verbindungslinie dargestellt wird und die Suchabfrage (15) ein Abfragewort umfasst, welches eines der Wörter in einem der $k$ Texte (11) ist und durch einen der Knoten des Graphen dargestellt wird,
      • ein Mittel zum Entwickeln des Graphen nach einer Reihe vordefinierter Regeln,
      • ein Mittel zum Ermitteln der näheren Umgebung des Wortes, wobei die nähere Umgebung diejenigen Knoten umfasst, die über eine oder mehrere Verbindungslinien mit dem Wort verbunden sind, und
      • ein Mittel zum Berechnen der charakteristischen Stärke unter Einbeziehung der topologischen Struktur der näheren Umgebung, wobei die charakteristische Stärke des Textes in Abhängigkeit von den charakteristischen Stärken aller Sätze des betreffenden Textes berechnet wird.

**17.** System nach Anspruch 16, bei welchem die Datenbank (10) in einem Server (90) gespeichert ist, der über ein Netzwerk (94) mit einem Client-System (91, 92, 93) verbunden ist.

**18.** System nach Anspruch 16, welches einen Parser zum Erzeugen des Graphen umfasst.

**19.** System nach Anspruch 16, welches einen Semantiknetzgenerator zum Erzeugen des Graphen umfasst.

**20.** System nach Anspruch 16, bei welchem die Recheneinheit die charakteristische Stärke durch Ermitteln der Anzahl der direkten Nachbarn des Wortes ermittelt, wobei ein direkter Nachbar ein Wort ist, das über eine Verbindungslinie mit dem Wort verbunden ist.

**21.** Informationssuchsystem, welches ein System nach einem der Ansprüche 16 bis 20 umfasst.

**22.** Server-Computersystem, welches das System nach einem der Ansprüche 16 bis 20 umfasst.

**23.** Client-Computersystem, welche das System nach einem der Ansprüche 16 bis 20 umfasst.

**24.** Softwaremodul zur automatischen Ermittlung einer charakteristischen Stärke, welche anzeigt, wie gut ein Text in einer Datenbank eine Abfrage beschreibt, wobei das Softwaremodul bei Ausführung durch ein programmierbares Datenverarbeitungssystem die folgenden Schritte ausführt:

a) einen Benutzer in die Lage versetzen, eine Abfrage (15) zu definieren, die ein Wort umfasst,
b) Laden jedes aus der Vielzahl der Texte;
c) Erzeugen eines Graphen (71) mit Knoten und Verbindungslinien, wobei Wörter des Textes (17) durch Knoten dargestellt werden und die Beziehung zwischen Wörtern durch die Verbindungslinien dargestellt wird, wobei das Abfragewort eines der Wörter im Text (17) ist und durch einen der Knoten des Graphen dargestellt wird und der Text der geladene Text ist;
d) Entwickeln des Graphen (72) nach einer Reihe vordefinierter Regeln,
e) Ermitteln einer nähren Umgebung des Wortes, wobei die nähere Umgebung diejenigen Knoten umfasst, die über eine oder einige wenige Verbindungslinien mit dem Wort verbunden sind, und
f) Berechnen der charakteristischen Stärke unter Berücksichtigung der topologischen Struktur der näheren Umgebung, wobei die charakteristische Stärke des Textes in Abhängigkeit von den charakteristischen Stärken aller Sätze des betreffenden Textes berechnet wird;
g) Anzeigen der charakteristischen Stärke.

**25.** Softwaremodul nach Anspruch 24, welches eine Suchmaschine (16) zum Auffinden derjenigen Texte (11, 12, 13) in einer Vielzahl von Texten (17) umfasst, die mit der Abfrage übereinstimmen.

**Revendications**

**1.** Procédé destiné à déterminer automatiquement un degré de pertinence qui indique dans quelle mesure un texte, identifié comme contenant un mot de requête (11), mémorisé dans une base de données (10), décrit une requête (15), comprenant les étapes consistant à :

a) définir la requête (15) comprenant le mot de requête qui identifie le texte comme contenant le mot de requête,
b) créer (71) un graphe (30) avec des noeuds et des liaisons, où les mots du texte (11) sont représentés par les noeuds et une relation entre les mots est représentée par les liaisons, le mot de requête étant représenté par l'un des noeuds du graphe (30),
c) faire évoluer (72) le graphe (30) conformément à un ensemble prédéfini de règles,
d) déterminer un voisinage du mot de requête, le voisinage comprenant les noeuds reliés par l'intermédiaire d'une ou plusieurs liaisons au mot de requête, et
e) calculer le degré de pertinence sur la base du voisinage, où le degré de pertinence du texte est calculé selon les degrés de pertinence de toutes les phrases du texte respectif.

**2.** Procédé selon la revendication 1, dans lequel le degré de pertinence est calculé à l'étape e) en comptant le nombre

**EP 1 225 517 B1**

de voisins immédiats du mot de requête, où un voisin immédiat est un mot qui est relié par l'intermédiaire d'une liaison au mot de requête.

**3.** Procédé selon la revendication 1, dans lequel la base de données (10) mémorise une pluralité de textes (17).

**4.** Procédé selon la revendication 1, comprenant l'exécution d'une recherche destinée à trouver des textes (11, 12, 13) dans la base de données (10) qui contiennent le mot de requête.

**5.** Procédé selon la revendication 4, dans lequel les étapes b) à e) sont répétées pour chaque texte (11, 12, 13) qui contient le mot de requête.

**6.** Procédé selon la revendication 5, comprenant l'affichage d'une liste (82) représentant le degré de pertinence de chaque texte (11, 12, 13) qui contient le mot.

**7.** Procédé selon l'une quelconque des revendications précédentes, dans lequel un analyseur syntaxique est employé pour créer le graphe à l'étape b).

**8.** Procédé selon l'une quelconque des revendications 1 à 6, dans lequel un générateur de réseau sémantique est employé pour créer le graphe (30) à l'étape b).

**9.** Procédé selon l'une quelconque des revendications 1 à 3, dans lequel un premier graphe est généré pour chaque phrase du texte et dans lequel le degré de pertinence est calculé pour chaque phrase en exécutant les étapes b) à e).

**10.** Procédé selon l'une quelconque des revendications 1 à 3, dans lequel on fait évoluer le graphe à l'étape c) en supprimant tous les mots du texte qui ne sont pas des noms et/ou des verbes.

**11.** Procédé selon l'une quelconque des revendications 1 à 3, dans lequel on fait évoluer le graphe à l'étape c) en remplaçant les verbes auxiliaires par des verbes principaux.

**12.** Procédé selon l'une quelconque des revendications 1 à 3, dans lequel on fait évoluer le graphe à l'étape c) en omettant les verbes.

**13.** Procédé selon l'une quelconque des revendications 1 à 3, dans lequel le sujet de la phrase est identifié et positionné au centre du graphe pour produire une structure de graphe en arborescence dans laquelle le sujet est à la racine, avant d'exécuter l'étape d).

**14.** Procédé selon la revendication 2, comprenant l'étape consistant à déterminer le nombre de seconds voisins du mot de requête, où un second voisin est un mot qui est relié par l'intermédiaire de deux liaisons au mot de requête.

**15.** Procédé selon la revendication 2 ou 14, dans lequel le degré de pertinence du texte est une moyenne calculée

  • en ajoutant les degrés de pertinence de toutes les phrases du texte respectif, et
  • en divisant ensuite le résultat de l'étape précédente par le nombre de phrases.

**16.** Système destiné à déterminer automatiquement un degré de pertinence qui indique dans quelle mesure un texte (17) dans une base de données (10) décrit une requête de recherche (15), le système comprenant :

  o Une base de données (10) mémorisant une pluralité de $m$ textes (17),
  o Un moteur de recherche (16) destiné à traiter une requête de recherche (15) de manière à identifier ces $k$ textes (11, 12, 13) à partir de la pluralité de $m$ textes (17) qui correspondent à la requête de recherche (15), et
  o Un moteur de calcul (18) doté d'un moyen destiné à calculer les degrés de pertinence de chacun des $k$ textes (11, 12, 13) qui correspondent à la requête de recherche (15), comprenant :

  • un moyen destiné à créer un graphe avec des noeuds et des liaisons, où les mots du texte sont représentés par les noeuds et les relations entre les mots sont représentées par les liaisons, la requête de recherche (15) comprenant un mot de recherche qui est l'un des mots dans l'un des $k$ textes (11) et qui est représenté par l'un des noeuds du graphe,
  • un moyen destiné à faire évoluer le graphe conformément à un ensemble prédéfini de règles,

• un moyen destiné à déterminer un voisinage du mot, où le voisinage comprend les noeuds qui sont reliés par l'intermédiaire d'une ou plusieurs liaisons au mot, et

• un moyen destiné à calculer le degré de pertinence sur la base de la structure topologique du voisinage, où le degré de pertinence du texte est calculé selon les degrés de pertinence de toutes les phrases du texte respectif.

**17.** Système selon la revendication 16, dans lequel la base de données (11) est mémorisée dans un serveur (90) relié par l'intermédiaire d'un réseau (94) à un système client (91, 92, 93).

**18.** Système selon la revendication 16, comprenant un analyseur syntaxique destiné à créer le graphe.

**19.** Système selon la revendication 16, comprenant un générateur de réseau sémantique destiné à créer le graphe.

**20.** Système selon la revendication 16, dans lequel le moteur de calcul calcule le degré de pertinence en comptant le nombre de voisins immédiats du mot, où l'un des voisins immédiats est un mot qui est relié par l'intermédiaire d'une liaison au mot.

**21.** Système de récupération d'informations comprenant un système selon l'une quelconque des revendications 16 à 20.

**22.** Système informatique serveur comprenant le système selon l'une quelconque des revendications 16 à 20.

**23.** Système informatique client comprenant le système selon l'une quelconque des revendications 16 à 20.

**24.** Module logiciel destiné à déterminer automatiquement un degré de pertinence qui indique dans quelle mesure un texte dans une base de données décrit une requête, où ledit module logiciel, lorsqu'il est exécuté par un système de traitement de données que l'on peut programmer, exécute les étapes consistant à :

a) permettre à un utilisateur de définir une requête (15) comprenant un mot,
b) extraire chaque texte d'une pluralité de textes,
c) créer un graphe (71) avec des noeuds et des liaisons, où les mots du texte (17) sont représentés par des noeuds et les relations entre les mots sont représentées au moyen des liaisons, le mot de requête étant l'un des mots dans le texte (17) et étant représenté par l'un des noeuds du graphe, ledit texte étant le texte extrait,
d) faire évoluer le graphe (72) conformément à un ensemble prédéfini de règles,
e) déterminer un voisinage du mot, où le voisinage comprend les noeuds qui sont reliés par l'intermédiaire d'une ou de plusieurs liaisons au mot, et
f) calculer le degré de pertinence sur la base de la structure topologique du voisinage, le degré de pertinence du texte étant calculé selon les degrés de pertinence de toutes les phrases du texte respectif,
g) afficher le degré de pertinence.

**25.** Module logiciel selon la revendication 24 comprenant un moteur de recherche (16) destiné à identifier les textes (11, 12, 13) dans une pluralité de textes (17) qui correspondent à la requête.

15

Query: agent

16

Search engine

10

17

14

11
12

13

18

calculation engine

19

Results:

|        | (C1) |
|--------|------|
| Text 11 | 1.25 |
| Text 13 | 0.75 |
| Text 12 | 0.25 |

**FIG. 1**

20

Fetching a text

21

Creating a graph

22

Evolving the graph

23

Determining the number of
immediate neighbors

24

Calculating characterizing
strength C1

25

Output
charcterizing
strength C1

26

FIG. 2

Fig. 3A

Fig. 3B

Fig. 3C

Fig. 3D

**Fig. 4A**

EP 1 225 517 B1

Fig. 4B

Fig. 4C

**Fig. 4D**

EP 1 225 517 B1

$\{\}_{SUB}$ — 44

definition — 41

agent — 42

30"

First neighbors: 1
First and second neighbors: 1

**Fig. 5A**

**31"**

{ }$_{SUB}$  — 45

| agent | processor | medium | spreadsheet | number | agent | medium |

48

| word | word | | | | 49 | action |

First neighbors: 0
First and second neighbors: 5

**Fig. 5B**

EP 1 225 517 B1

**Fig. 5C**

First neighbors: 2
First and second neighbors: 3

**Fig. 5D**

First neighbors: 2
First and second neighbors: 5

EP 1 225 517 B1

EP 1 225 517 B1

Result:

Sentence      1st      1st + 2nd

|  | 1st (64) | 1st + 2nd (61) |
|---|---|---|
| 1 | 1 | 1 |
| 2 | 0 | 5 |
| 3 | 2 | 3 |
| 4 | 2 | 5 |
| total | 5 | 14 |
| average | $C1 = 1.25$ | $C2 = 3.5$ |

**Fig. 6**

```
                    ┌─────────────────────┐      70
              ┌────→│   Fetching a text   │
              │     └─────────────────────┘
              │                │
              │                ▼
              │     ┌─────────────────────┐      71
              │     │   Creating a graph  │
              │     └─────────────────────┘
              │                │
              │                ▼
              │     ┌─────────────────────┐      72
              │     │  Evolving the graph │
              │     └─────────────────────┘
              │                │
              │                ▼
              │     ┌─────────────────────┐      73
              │     │Defining center of graph│
              │     └─────────────────────┘
              │                │
              │                ▼
              │     ┌─────────────────────┐      74
              │     │ Determining the number of│
              │     │   immediate neighbors│
              │     └─────────────────────┘
              │                │
              │                ▼
              │     ┌─────────────────────┐      75
              │     │ Determining the number of│
              │     │   second neighbors  │
              │     └─────────────────────┘
              │                │
              │                ▼
              │     ┌─────────────────────┐      76
              │     │ Calculating characterizing│
              │     │      strength C2    │
              │     └─────────────────────┘
              │                │
              │                ▼
              │     ╭─────────────────────╮      77
              │     │       Output        │
              └─────│    charcterizing    │
              78    │     strength C2     │
                    ╰─────────────────────╯
```

FIG. 7

Query: agent — 15

Search engine — 16

10

17

14

11
12
13

18

calculation engine

Results:

| | (C1) |
|---|---|
| Text 11 | 1.25 |
| Text 13 | 0.75 |
| Text 12 | 0.25 |

82

81

80

FIG. 8

Results:
| | (C1) |
|---|---|
| Text 11 | 1.25 |
| Text 13 | 0.75 |
| Text 12 | 0.25 |

91

92

93

94

90

Query:   agent    15

Search engine    16

10

17

14

11
12
13

calculation engine    18

**FIG. 9**

EP 1 225 517 B1

109

{ }SUB1

108

definition

110

{ }SUB2

103

vein

102

agent

112

Medium1

113

spreadsheet

number

115

Medium2

processor

111

114

118

action

104

John

105

article

stock

entity

116

106

119

action

107

chip

117

software

120

user

124

human

123

intervention

121

machine

122

human

100

FIG. 10

FIG. 11

EP 1 225 517 B1

FIG. 12